# EUROPEAN PATENT SPECIFICATION

(11) **EP 0 920 099 B1**
(45) Date of publication and mention of the grant of the patent: **28.11.2001**
(21) Application number: 98500234.4
(22) Date of filing: 23.10.1998
(51) Int. Cl.: H02G 3/04

(54) **Raceway base section for electrical cable systems**
Kanalbodenteil für elektrische Kabelsysteme
Section de base de canalisation pour système de cables électriques

(30) Priority: 28.11.1997 ES 9703102 U
(43) Date of publication of application: 02.06.1999
(73) Proprietor: APARELLAJE ELECTRICO, S.A., E-08903 L'Hospitalet de Llobregat (ES)
(72) Inventor: Benito Navazo, Juan Manuel, 08190-Sant Cugat del Valles (ES)
(74) Representative: Curell Sunol, Jorge

(56) References cited:
- EP-A- 0 725 465
- EP-A- 0 739 069

## Description

### Field of the Invention

The present invention relates to a raceway base section for electrical cable systems, said base section having a generally 'U' shaped cross section comprising two walls and having a bottom wall defining two lower longitudinal edge regions and a lower surface; and said raceways being made of plastics material and having a flattened cover section.

### Related Art

The majority of base sections of the above type have the two lower longitudinal edge portions thereof, adjacent the bottom wall of the base section, forming a more or less rounded edge. This arrangement has the drawback that it forms a gap between the base section and the flat surface on which the base section rests, in which dust gathers and highlights the faulty seating of the base section due to the surface irregularities of the vertical wall.

To overcome this drawback, in certain cases such edges have been beveled and this, although it hides the accumulation of dust and facilitates the cleaning thereof, it does not prevent it from being observable and that the said faulty seating due to the irregularities of the vertical wall is highlighted.

### Summary of the Invention

It is an object of the invention to overcome the above-mentioned drawback. This object is attained with a base section of the type first mentioned above wherein each of said longitudinal edge regions comprises successively without interruption: [a] a first portion as an extension of said raceway bottom wall, said first portion extending relative to said bottom wall slopingly upwardly and outwardly; [b] a second downwardly directed portion which, with said first portion, externally forms an inverted valley; and [c] a third upwardly directed portion which, with said downwardly directed portion, forms externally an inverted hip and is continued by one of said walls; said hip being at a higher level than the level determined by the lower surface of said bottom wall.

As a result of this, while the said drawbacks still do appear, they are not perceptible to the eye, since a screen is formed which hides both the accumulated dust and the faulty seating due to the surface irregularities of the vertical wall.

### Brief Description of the Drawing

To facilitate an understanding of the object of the invention, there will be described hereinafter one embodiment of the raceway base section for electrical cable systems, with reference to the accompanying drawing.

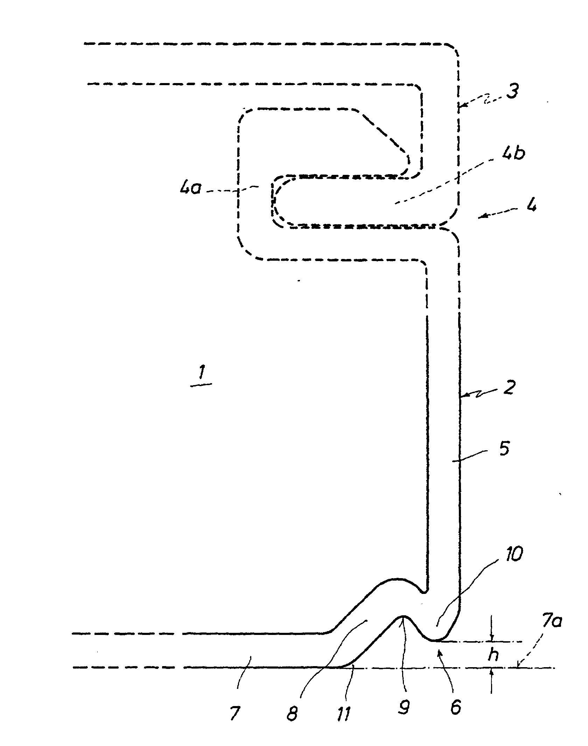

Figure 1 schematically shows the right cross section of one lateral half of a raceway for electrical cable systems, in which one of the lower edges, formed according to the invention, has been drawn in solid line and the remaining portions of the raceway are shown in phantom.

### Detailed Description

The raceway 1 for electrical cable systems shown in the drawings is of the type formed by a base section 2 having a generally 'U' shaped right cross section associated with a cover section 3 by way of mating coupling means 4.

The base section 2 comprises, in reality, two walls 5, two lower longitudinal edge regions 6 and a bottom wall 7 and, furthermore, means 4a for engagement with mating means 4b formed on the cover section 3.

In this description and in the claims, the outer surface of the bottom wall 7, which is deemed to be the bottom of the base section, is taken as a reference.

The said lower longitudinal edge regions 6 of the base section 2 have, as an extension of the bottom wall 7, a first portion 8 extending relative to said bottom wall 7 slopingly upwardly and outwardly; said first portion 8 is followed by a second downwardly directed portion which, together with the first portion 8, externally forms an inverted valley 9; thereafter there is a third upwardly directed portion which, with the second downwardly directed portion, forms externally an inverted hip 10.

Between the lowermost point of this inverted hip 10 and the extension 7a of the lower surface of the bottom wall 7 there is a small dimension h.

With this arrangement of the lower longitudinal edge regions 6 of the base section 2, the flat portion 8 forms, with the extension 7a of the lower surface of the bottom wall 7, a longitudinal slot 11 in which dust may gather, but which is concealed by the screen formed by the third upwardly directed portion, the lower portion of which is the hip 10, at the same time as this third portion also conceals the possible faulty seating of the raceway 1 on the surface of the vertical wall on which it is installed, which coincides with the extension 7a of the lower surface of the bottom wall 7, due to any possible irregularities of the said surface.

## Claims

1. A raceway base section for electrical cable systems, said base section (2) having a generally 'U' shaped cross section comprising two walls (5) and having a bottom wall (7) defining two lower longitudinal edge regions (6) and a lower surface; and said raceways (1) being made of plastics material and having a flattened cover section (3), **characterized in that** each of said longitudinal edge regions (6) comprises successively without interruption: [a] a first portion (8) as an extension of said raceway (1) bottom wall (7), said first portion (8) extending relative to said bottom wall (7) slopingly upwardly and outwardly; [b] a second downwardly directed portion which, with said first portion (8), externally forms an inverted valley (9); and [c] a third upwardly directed portion which, with said downwardly directed portion, forms externally an inverted hip (10) and is continued by one of said walls (5); said hip (10) being at a higher level than the level determined by said lower surface of said bottom wall (7).

## Patentansprüche

1. Kabelkanal-Basisabschnitt für elektrische Kabelsysteme, wobei der Basisabschnitt (2) einen im Wesentlichen u-förmigen Querschnitt hat mit zwei Wänden (5) und einer Bodenwand (7), die zwei untere Längskanten-Abschnitte (6) und eine untere Oberfläche definieren; wobei die Kabelkanäle (1) aus Plastikmaterial bestehen und einen flachen Abdeckabschnitt (3) haben, **dadurch gekennzeichnet, dass** jeder der Längskanten-Abschnitte (6) aufeinander folgend ohne Unterbrechung aufweist:
a) einen ersten Abschnitt (8) als Verlängerung der Kabelkanal-Bodenwand (7), der relativ zur Bodenwand (7) nach oben hin und außen ansteigt;
b) einen zweiten, nach unten weisenden Abschnitt, der mit dem ersten Abschnitt (8) außen ein umgekehrtes Tal (9) bildet; und
c) einen dritten, nach oben weisenden Abschnitt, der zusammen mit dem nach unten weisenden Abschnitt außen einen umgekehrten Walm (10) bildet und sich in einer der Wände (5) fortsetzt; wobei der Walm auf höherem Niveau liegt als das von der unteren Fläche der Bodenwand (7) bestimmte Niveau.

## Revendications

1. Section de base de chemin de câbles pour réseaux de câbles électriques, ladite section de base (2) ayant une section transversale en forme générale de U comportant deux parois (5) et ayant une paroi de fond (7) qui définit deux régions de bord longitudinales inférieures (6) et une surface inférieure ; lesdits chemins de câbles (1) étant en matière plastique et ayant un capot de forme plane (3), **caractérisée en ce que** chacune desdites régions de bord longitudinales (6) comprend successivement, sans interruption : [a] une première partie (8) qui constitue un prolongement de ladite paroi de fond (7) du chemin de câbles (1), ladite première partie (8) s'étendant de manière oblique vers le haut et vers l'extérieur par rapport à ladite paroi de fond (7) ; [b] une seconde partie, orientée vers le bas et qui, avec ladite première partie (8), forme extérieurement une vallée inversée (9) ; et [c] une troisième partie orientée vers le haut et qui, avec ladite partie orientée vers le bas, forme extérieurement une arête inversée (10) et se poursuit par l'une desdites parois (5), ladite arête (10) étant à un niveau plus haut que le niveau déterminé par ladite surface inférieure de ladite paroi de fond (7).
